# EUROPÄISCHE PATENTANMELDUNG

(11) **EP 4 266 709 A1**
(43) Veröffentlichungstag der Anmeldung: **25.10.2023**
(21) Anmeldenummer: 23164702.5
(22) Anmeldetag: 28.03.2023
(51) Int. Cl.: H04W 4/02, A47J 36/32, H04W 4/80, H04L 49/40, H04L 9/40

(54) **HAUSHALTSGERÄTESYSTEM, HAUSHALTSGERÄT UND VERFAHREN ZUM BETRIEB EINES HAUSHALTSGERÄTESYSTEMS**

(30) Priorität: 21.04.2022 EP 22382372
(71) Anmelder: BSH Hausgeräte GmbH, 81739 München (DE)
(72) Erfinder: Moya Nogues, Jesus Manuel, 50001 Zaragoza (ES); Llorente Gil, Sergio, 50009 Zaragoza (ES); Rivera Peman, Julio, 50410 Cuarte de Huerva (Zaragoza) (ES); Villuendas Lopez, Francisco, 50009 Zaragoza (ES); Mir Bel, Jorge, 50019 Zaragoza (ES)

(57) **Zusammenfassung**

Die Erfindung geht aus von einem Haushaltsgerätesystem (10) mit einer zumindest eine Kommunikationsschnittstelle (20) aufweisenden Steuerungsumgebung (18), welche dazu vorgesehen ist, in einem Betriebszustand automatisch zu prüfen, ob eine externe Einheit (14) zu einer Bedienung zumindest eines Haushaltsgeräts (12) in einem Bedienungsbereich (26) angeordnet ist.

Um ein gattungsgemäßes System mit verbesserten Eigenschaften hinsichtlich eines Komforts und einer Sicherheit sowie einer Erkennung zumindest einer externen Einheit bereitzustellen, wird vorgeschlagen, dass die Kommunikationsschnittstelle (20) zur Kommunikation mittels Ultrabreitband vorgesehen ist.

## Beschreibung

### Stand der Technik

Die Erfindung betrifft ein Haushaltsgerätesystem nach dem Oberbegriff des Anspruchs 1, ein Haushaltsgerät nach Anspruch 10 und ein Verfahren zum Betrieb eines Haushaltsgerätesystems nach dem Oberbegriff des Anspruchs 11.

Aus dem Stand der Technik ist bereits ein Haushaltsgerätesystem mit einer Steuereinheit, zumindest einem Haushaltsgerät und einer externen Einheit bekannt. Die externe Einheit ist zu einer Bedienung des Haushaltsgeräts mittels eines Bedienungssignals vorgesehen. In einem Betriebszustand überprüft die Steuereinheit für den Fall eines Empfangs eines Bedienungssignals von der externen Einheit, ob die externe Einheit in einem Bedienungsbereich angeordnet ist, innerhalb welchem eine Bedienung des Haushaltsgeräts durch die externe Einheit aufgrund gesetzlicher Vorgaben zulässig ist. Eine Kommunikation zwischen dem Haushaltsgerät und der externen Einheit zur Erkennung, ob die externe Einheit in dem Bedienungsbereich angeordnet ist, erfolgt mittels Bluetooth.

Die Aufgabe der Erfindung besteht insbesondere darin, eine gattungsgemäße Vorrichtung mit verbesserten Eigenschaften hinsichtlich eines Komforts und einer Sicherheit sowie einer Erkennung zumindest einer externen Einheit bereitzustellen. Die Aufgabe wird erfindungsgemäß durch die Merkmale der Ansprüche 1, 10 und 11 gelöst, während vorteilhafte Ausgestaltungen und Weiterbildungen der Erfindung den Unteransprüchen entnommen werden können.

### Vorteile der Erfindung

Die Erfindung geht aus von einem Haushaltsgerätesystem mit einer zumindest eine Kommunikationsschnittstelle aufweisenden Steuerungsumgebung, welche dazu vorgesehen ist, in zumindest einem Betriebszustand automatisch zu prüfen, ob eine externe Einheit zu einer Bedienung zumindest eines Haushaltsgeräts in einem Bedienungsbereich angeordnet ist.

Es wird vorgeschlagen, dass die Kommunikationsschnittstelle zur Kommunikation mittels Ultrabreitband vorgesehen ist.

Durch eine derartige Ausgestaltung kann ein hoher Komfort, hinsichtlich eines Bedienkomforts, gesteigert sowie eine hohe Sicherheit erreicht werden. Aufgrund einer Kommunikation mittels Ultrabreitband kann ein besonders kleiner Bedienungsbereich festlegbar und/oder definierbar sein, in welchem eine externe Einheit zur Bedienung zumindest eines Haushaltsgeräts angeordnet werden kann. Zudem kann eine Entfernungsmessung zwischen der externen Einheit und dem Haushaltsgerät sowie eine Anwesenheitserkennung der externen Einheit in dem Bedienungsbereich effizienter, und zwar schneller und/oder komfortabler gestaltet werden. Ferner kann eine präzise Aussage über eine Anordnung der externen Einheit in dem Bedienungsbereich ermöglicht werden. Darüber hinaus kann auf eine individuelle Kalibrierung der externen Einheit mit dem Haushaltsgerät verzichtet werden. Außerdem kann eine Kommunikationsverbindung zwischen der externen Einheit und dem Haushaltsgerät erheblich verbessert werden. Damit kann eine komfortable und/oder schnelle und/oder unkomplizierte Bedienung des Haushaltsgeräts durch die externe Einheit ermöglicht werden, welche nur unter Erfüllung vordefinierter Vorgaben freigegeben werden kann.

Das Haushaltsgerätesystem ist zu einem Einsatz, und zwar zur Verwendung und/oder Anordnung in einem Haushalt, insbesondere einer Küche, vorgesehen. Insbesondere weist das Haushaltsgerätesystem zumindest ein Haushaltsgeräteobjekt und/oder zumindest das Haushaltsgerät und/oder zumindest ein Haushaltsgerätezubehörobjekt auf, wobei das Haushaltsgerätesystem insbesondere zusätzlich zumindest ein Küchenobjekt und/oder zumindest eine weitere Baueinheit aufweisen könnte, das/die insbesondere von einem Haushaltsgeräteobjekt und/oder von einem Haushaltsgerät und/oder von einem Haushaltsgerätezubehörobjekt verschieden ausgebildet sein könnte/könnten. Unter einem "Haushaltsgeräteobjekt" soll zumindest ein Teil, insbesondere eine Unterbaugruppe, eines Haushaltsgeräts, insbesondere eines Gargeräts, vorteilhaft eines Induktionsgargeräts, besonders vorteilhaft eines Kochfelds und vorzugsweise eines Induktionskochfelds, verstanden werden. Unter einem "Haushaltsgerätezubehörobjekt" soll ein Objekt verstanden werden, welches vorteilhaft zu einem Gebrauch und/oder zu einer Verwendung mit einem Haushaltsgerät vorgesehen ist und/oder welches als zumindest ein Zubehörteil und/oder als zumindest ein Satz an Zubehörteilen für ein Haushaltsgerät ausgebildet ist. Das Haushaltsgerätesystem kann eine Vielzahl an Einheiten und/oder Vorrichtungen aufweisen, welche zur Bearbeitung und/oder Behandlung und/oder Verarbeitung und/oder Lagerung von Lebensmitteln verwendet werden können.

Das Haushaltsgerätesystem könnte beispielsweise als ein Garsystem, insbesondere als Backofensystem, Mikrowellensystem, Dampfgerätesystem und/oder Grillgerätesystem, als ein Haushaltsreinigungsgerätesystem, beispielsweise als Geschirrspülmaschinensystem und/oder Waschmaschinensystem und/oder Trocknersystem, und/oder als ein Haushaltskältegerätesystem, beispielsweise als Kühl- und/oder Gefrierschranksystem, ausgebildet sein. Bevorzugt ist das Haushaltsgerätesystem als ein Kochfeldsystem und besonders bevorzugt als ein Induktionskochfeldsystem ausgebildet.

Insbesondere bildet das Haushaltsgerät eine Unterbaugruppe des Haushaltsgerätesystems. Das Haushaltsgerät kann als ein Haushaltsgroßgerät, insbesondere als ein Haushaltskältegroßgerät, beispielsweise eine Kühltruhe und/oder ein Kühl- und/oder Gefrierschrank und/oder ein Getränkekühler, ausgebildet sein. Das, insbesondere als Kältegerät ausgebildete, Haushaltsgerät könnte beispielsweise zu einer Lagerung und/oder Aufbewahrung und/oder Kühlung von Lebensmitteln und/oder von Kühlgut, wie beispielsweise von Getränken und/oder von Fleisch und/oder von Fisch und/oder von Milchprodukten und/oder von Kosmetika und/oder Medikamenten, vorgesehen sein. Alternativ und/oder zusätzlich könnte das Haushaltsgerät als ein Haushaltsreinigungsgerät, beispielsweise als Geschirrspülmaschine und/oder Waschmaschine und/oder Trockner, und/oder als Gargerät, beispielsweise als Backofen und/oder Mikrowelle und/oder Grillgerät, ausgebildet sein. Ferner könnte das als Haushaltsreinigungsgerät ausgebildete Haushaltsgerät zu einer Reinigung, beispielsweise von Geschirr und/oder Wäsche und/oder eines Zimmers und/oder eines Möbelstücks, vorgesehen sein. Vorzugsweise ist das Haushaltsgerät als ein Kochfeld, insbesondere als ein Induktionskochfeld, ausgebildet. Dadurch kann ein besonders komfortables und effizientes Haushaltsgerätesystem bereitgestellt werden.

Denkbar wäre auch, dass das Haushaltsgerätesystem zumindest ein Haushaltsmöbel aufweist, insbesondere in welchem das Haushaltsgerät angeordnet sein könnte. Das Haushaltsmöbel kann beispielsweise als Schrank, insbesondere als ein Lebensmittellagerschrank und/oder ein Gewürzregal, ausgebildet sein. Das Haushaltsmöbel kann Teil der Küche sein.

Bevorzugt weist das Haushaltsgerät eine Haushaltsgerätesteuereinheit auf, welche insbesondere als eine zumindest teilweise und vorteilhaft zumindest zu einem Großteil in dem Haushaltsgerät integrierte Steuereinheit ausgebildet ist. Unter einer "Steuereinheit" soll in diesem Dokument eine elektrische und/oder elektronische Einheit verstanden werden, welche in einem Betriebszustand zumindest eine Gerätefunktion und/oder zumindest eine Gerätehauptfunktion steuert und/oder regelt. Die Steuereinheit weist vorteilhaft zumindest eine Recheneinheit und vorteilhaft zusätzlich zu der Recheneinheit zumindest eine Speichereinheit auf, in welcher vorteilhaft zumindest ein Steuer- und/oder Regelprogramm gespeichert ist, das vorteilhaft zu einer Ausführung durch die Recheneinheit vorgesehen ist.

Insbesondere ist die Haushaltsgerätesteuereinheit dazu vorgesehen, zumindest eine Haushaltsgerätefunktion und/oder zumindest eine Haushaltsgerätehauptfunktion zu steuern und/oder zu regeln. Das Haushaltsgerät könnte zumindest eine Heizeinheit zur Beheizung von Gargeschirr, und zwar zur Garung von Lebensmitteln umfassen. Die Haushaltsgerätesteuereinheit kann dazu vorgesehen sein, die Heizeinheit, insbesondere zumindest ein Heizelement der Heizeinheit, anzusteuern und/oder zu regeln. Ist das Haushaltsgerät das Kochfeld, kann die Haushaltsgerätesteuereinheit entsprechend als Kochfeldsteuereinheit ausgebildet sein. Alternativ und/oder zusätzlich wäre denkbar, dass wenn das Haushaltsgerät beispielsweise ein Backofen oder eine Kombination aus Backofen und Kochfeld ist, die Haushaltsgerätesteuereinheit eine Backofensteuereinheit oder eine Steuereinheit zur Steuerung und/oder Regelung des Backofens und des Kochfelds ist.

Das Haushaltsgerätesystem kann zumindest eine Bedienerschnittstelle umfassen. Insbesondere weist die Steuerungsumgebung die Bedienerschnittstelle auf. Die Bedienerschnittstelle kann zu einer Eingabe und/oder Auswahl und/oder Ausgabe zumindest eines Werts und/oder Parameters und/oder einer Funktion von und/oder an einen Bediener vorgesehen sein. Insbesondere ist die Bedienerschnittstelle zu einer Eingabe und/oder Auswahl und/oder Ausgabe von Betriebsparametern vorgesehen, wie beispielsweise zumindest einer Heizleistung der Heizeinheit und/oder zumindest einer Heizleistungsdichte der Heizeinheit und/oder zumindest einer Heizzone und/oder zumindest einer Temperatur und/oder zumindest einem anderen, einem Fachmann als sinnvoll erscheinenden Betriebsparameter. Vorteilhaft ist mittels der Bedienerschnittstelle zumindest die Haushaltsgerätefunktion und/oder Haushaltsgerätehauptfunktion auswählbar und/oder startbar und/oder beendbar und/oder einstellbar und/oder veränderbar und/oder bedienbar. Das Haushaltsgerät und/oder die externe Einheit kann/können zumindest teilweise die Bedienerschnittstelle aufweisen. Das Haushaltsgerät und/oder die externe Einheit kann/könnten jeweils zumindest ein der Bedienerschnittstelle zugehöriges Objektelement aufweisen.

Vorteilhaft weist das Haushaltsgerät, insbesondere das Kochfeld, eine Haushaltsgerätebedienerschnittstelle auf. Die Haushaltsgerätebedienerschnittstelle kann mit der Haushaltsgerätesteuereinheit interagieren. Mittels der Haushaltsgerätebedienerschnittstelle kann das Haushaltsgerät beispielsweise ein- und/oder ausgeschaltet werden und/oder zumindest die Haushaltsgerätefunktion und/oder zumindest eine Haushaltsgerätehauptfunktion des Haushaltsgeräts auswählbar und/oder einstellbar und/oder bedienbar sein. Vorzugsweise ist die Haushaltsgerätebedienerschnittstelle Teil der Bedienerschnittstelle. Der Bediener kann mittels der Haushaltsgerätebedienerschnittstelle das Haushaltsgerät akustisch und/oder haptisch bedienen.

Das Haushaltsgerät und/oder die externe Einheit kann/können zumindest teilweise die Steuerungsumgebung aufweisen. Insbesondere ist die Haushaltsgerätesteuereinheit Teil der Steuerungsumgebung. In zumindest einem Betriebszustand kann die Steuerungsumgebung die Bedienung des Haushaltsgeräts durch die externe Einheit steuern und/oder regeln.

Die Steuerungsumgebung kann eine Steuereinheit der externen Einheit umfassen. Die Steuereinheit der externen Einheit kann dazu vorgesehen sein, die Bedienung des Haushaltsgeräts zu steuern und/oder zu regeln. Bevorzugt weist die externe Einheit zumindest ein Bedienelement zu einer Eingabe und/oder Auswahl und/oder einer Ausgabe zumindest eines Werts und/oder Parameters und/oder einer Funktion von dem und/oder an den Bediener auf. Insbesondere ist das Bedienelement Teil der Bedienerschnittstelle. Das Haushaltgerät kann mittels des Bedienelements der externen Einheit steuerbar und/oder regelbar sein. Insbesondere interagiert die Steuereinheit der externen Einheit mit zumindest dem Bedienelement. Das Bedienelement kann haptisch und/oder akustisch von dem Bediener bedienbar sein und beispielsweise einen Touch-Display umfassen.

Bevorzugt sind die externe Einheit und das Haushaltsgerät zu einer drahtlosen Kommunikation miteinander vorgesehen. Denkbar wäre jedoch auch, dass die externe Einheit und das Haushaltsgerät drahtgebunden miteinander kommunizieren. Insbesondere ist die Steuerungsumgebung dazu vorgesehen, zumindest eine Kommunikation zwischen der externen Einheit und dem Haushaltsgerät mittels der Kommunikationsschnittstelle zu steuern und/oder zu regeln. Insbesondere kommuniziert in zumindest dem Betriebszustand das Haushaltsgerät mit der externen Einheit mittels Ultrabreitband (UWB). Insbesondere ist die Kommunikationsschnittstelle zur Kommunikation zwischen der externen Einheit und zumindest dem Haushaltsgerät mit Frequenzen von zumindest 3 GHz, vorteilhaft zumindest 5 GHz und bevorzugt zumindest 10 GHz vorgesehen.

Bevorzugt handelt es sich bei dem genannten Betriebszustand um einen Betriebszustand zumindest zur Erkennung und/oder Überprüfung einer Anwesenheit der externen Einheit in dem Bedienungsbereich. Die Steuerungsumgebung könnte lediglich die Anwesenheit der externen Einheit in dem Bedienungsbereich überprüfen und/oder erkennen. Vorzugsweise ist die Steuerungsumgebung zusätzlich dazu vorgesehen, die externe Einheit in dem Bedienungsbereich zu lokalisieren und/oder eine Lage der externen Einheit bezüglich des Haushaltsgeräts zu ermitteln. Besonders bevorzugt ermittelt die Steuerungsumgebung eine Entfernung, insbesondere einen Abstand, zwischen der externen Einheit und dem Haushaltsgerät und/oder eine Ausrichtung der externen Einheit bezüglich des Haushaltsgeräts. Die Steuerungsumgebung kann dazu vorgesehen sein, bei der automatischen Prüfung zumindest eine Abstandsmessung der externen Einheit zu zumindest einem Punkt, insbesondere zumindest zwei, vorteilhaft zu zumindest fünf, vorzugsweise zu zumindest zehn und besonders bevorzugt zu einer Vielzahl an Punkten des Haushaltsgeräts zu berücksichtigen. Die Steuerungsumgebung könnte mittels der Abstandsmessung eine räumliche Entfernung der externen Einheit zu dem Punkt des Haushaltsgeräts ermitteln. Ferner könnte die Steuereinheit bei der automatischen Prüfung zumindest eine Signalstärkenmessung zumindest eines von dem Haushaltsgerät an die externe Einheit übermittelten Signals berücksichtigen.

Unter einem "Bedienungsbereich" soll ein räumlicher Bereich verstanden werden, innerhalb welchem eine Bedienung des Haushaltsgeräts durch die externe Einheit zulässig ist und insbesondere gesetzlichen Vorgaben entspricht. Beispielsweise könnte der Bedienungsbereich, beispielsweise unabhängig von einer vorliegenden Ausgestaltung und/oder von einem vorliegenden Layout, vordefiniert sein, und zwar beispielsweise in Größe und/oder Form. Der Bedienungsbereich ist, insbesondere in Größe und/oder Form, vorteilhaft abhängig von einer vorliegenden Ausgestaltung und/oder von einem vorliegenden Layout insbesondere eines Zimmers oder Raums, in welchem das Haushaltsgerät angeordnet ist. Vorteilhaft ist der Bedienungsbereich, insbesondere in Größe und/oder Form, auf das Zimmer, insbesondere auf eine Größe und/oder Form und/oder Gestalt des Zimmers, beschränkt, in welchem das Haushaltsgerät angeordnet ist. Der Bedienungsbereich könnte abhängig von einer Möblierung eines Zimmers, in welchem das Haushaltsgerät angeordnet ist, sein. Beispielsweise könnten extremale Werte und/oder Eigenschaften des Bedienungsbereichs vordefiniert sein, welche, beispielsweise im Fall eines sehr großen Zimmers, den Bedienungsbereich begrenzen und/oder definieren könnten. Der Bedienungsbereich könnte sich beispielsweise ausgehend von dem Haushaltsgerät innerhalb zumindest eines Maximalabstands zu dem Haushaltsgerät erstrecken. Der Maximalabstand zu dem Haushaltsgerät könnte beispielsweise durch die extremalen Werte und/oder Eigenschaften des Bedienungsbereichs vordefiniert sein. Alternativ oder zusätzlich könnte der Maximalabstand zu dem Haushaltsgerät durch das Zimmer, insbesondere durch eine vorliegende Größe und/oder Form und/oder Gestalt des Zimmers, definiert und/oder vorgegeben sein.

Aufgrund der Kommunikation mittels Ultrabreitband kann ein besonders kleiner Bedienungsbereich festlegbar und/oder definierbar sein. Der Bedienungsbereich könnte auf wenige cm beschränkt sein. Der Bedienungsbereich könnte beispielsweise auf einen Abstand ausgehend von dem Haushaltsgerät, insbesondere einen Radius um das Haushaltsgerät, von höchstens 10 cm, vorteilhaft höchstens 20 cm, vorzugsweise höchstens 30 cm und besonders bevorzugt höchstens 50 cm beschränkt sein.

In Abhängigkeit von einem Ergebnis der automatischen Überprüfung der Anordnung der externen Einheit in dem Bedienungsbereich kann die Steuerungsumgebung die Bedienung des Haushaltsgeräts durch die externe Einheit freigeben und/oder blockieren. Unter "automatisch" soll in diesem Zusammenhang selbsttätig und/oder unter Vermeidung einer Bedieneinwirkung und/oder unter Vermeidung einer Bedieneingabe zu einer Bestätigung durch den Bediener verstanden werden. Bei der Bedieneinwirkung handelt es sich beispielsweise um Bedieneraktivitäten im Zusammenhang mit einer Bestätigung und/oder insbesondere jeglicher Art von Bedieneraktivität, welche sich von einer Übermittlung eines Bedienungssignals unterscheidet.

Unter "vorgesehen" soll hier und im Folgenden speziell programmiert, ausgelegt und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Ferner wird vorgeschlagen, dass für den Fall, dass die externe Einheit innerhalb des Bedienungsbereichs angeordnet ist, die Steuerungsumgebung dazu vorgesehen ist, die Bedienung des Haushaltsgeräts durch die externe Einheit freizugeben. Hierdurch kann eine Sicherheit sowie ein Komfort gesteigert werden. Zudem kann eine komfortable und/oder schnelle und/oder unkomplizierte Bedienung eines Haushaltsgeräts durch eine externe Einheit ermöglicht werden. Darüber hinaus kann eine sichere Bedienung des Haushaltsgeräts bereitgestellt werden, da die Bedienung des Haushaltsgeräts durch die externe Einheit nur unter Erfüllung vordefinierter Vorgaben freigegeben werden kann. Insbesondere gibt die Steuerungsumgebung bei Anordnung der externen Einheit in dem Bedienungsbereich die Bedienung des Haushaltsgeräts durch die externe Einheit frei. Unter der Wendung, dass die Steuerungsumgebung dazu vorgesehen ist, die Bedienung des Haushaltsgeräts durch die externe Einheit "freizugeben", soll verstanden werden, dass die Steuerungsumgebung die Bedienung des Haushaltsgeräts durch die externe Einheit freischaltet und/oder ermöglicht und/oder zulässt.

Um eine Sicherheit weiter zu verbessern und ein unkontrolliertes und/oder ungewolltes Bedienen eines Haushaltsgeräts durch zumindest eine externe Einheit zu verhindern, und zwar bevorzugt bei Unterschreitung bestimmter Sicherheitsanforderungen, wird vorgeschlagen, dass für den Fall, dass die externe Einheit außerhalb des Bedienungsbereichs angeordnet ist, die Steuerungsumgebung dazu vorgesehen ist, die Bedienung des Haushaltsgeräts durch die externe Einheit zu verweigern. Insbesondere blockiert die Steuerungsumgebung bei Anordnung der externen Einheit außerhalb des Bedienungsbereichs die Bedienung des Haushaltsgeräts durch die externe Einheit. Unter der Wendung, dass die Steuerungsumgebung dazu vorgesehen ist, die Bedienung des Haushaltsgeräts durch die externe Einheit zu "blockieren", soll verstanden werden, dass die Steuerungsumgebung die Bedienung des Haushaltsgeräts durch die externe Einheit verhindert und/oder unterbindet und/oder sperrt.

Wenn die Steuerungsumgebung dazu vorgesehen ist, zeitlich wiederkehrend automatisch eine Verbindung zwischen der externen Einheit und dem Haushaltsgerät zu überprüfen, kann eine Kommunikation zwischen einer externen Einheit und einem Haushaltsgerät weiter optimiert, bevorzugt präzisiert, und damit wiederum ein Komfort sowie eine Sicherheit gesteigert werden. Zudem kann eine versehentliche Bedienung des Haushaltsgeräts durch die externe Einheit, welche sich außerhalb des Bedienungsbereichs befindet, vermieden werden, wodurch insbesondere eine sichere und/oder komfortable Ausgestaltung bereitgestellt werden kann.

Die Steuerungsumgebung kann kontinuierlich, diskontinuierlich, periodisch oder antiperiodisch die Verbindung zwischen der externen Einheit und dem Haushaltsgerät überprüfen. Bevorzugt überprüft die Steuerungsumgebung in regelmäßigen zeitlichen Abständen wiederholend die Verbindung zwischen der externen Einheit und dem Haushaltsgerät. Vorteilhaft prüft die Steuerungsumgebung in regelmäßigen zeitlichen Abständen von maximal 300 s, insbesondere von maximal 100 s, vorteilhaft von maximal 50 s, besonders vorteilhaft von maximal 30 s, vorzugsweise von maximal 10 s und besonders bevorzugt von maximal 5 s automatisch, ob die externe Einheit zu der Bedienung des Haushaltsgeräts in dem Bedienungsbereich angeordnet ist. Die Steuerungsumgebung kann, insbesondere bei Aktivierung des Haushaltsgeräts und/oder der externen Einheit, beispielsweise über eine Zeitdauer von mindestens 5 min, insbesondere von mindestens 10 min, vorteilhaft von mindestens 15 min, besonders vorteilhaft von mindestens 20 min, vorzugsweise von mindestens 25 min und besonders bevorzugt von mindestens 30 min automatisch prüfen, ob die externe Einheit zur Bedienung des Haushaltsgeräts in dem Bedienungsbereich angeordnet ist.

Insbesondere handelt es sich bei der zeitlich wiederkehrenden automatischen Prüfung um einen automatisch und/oder intrinsisch gesetzten Trigger zu der automatischen Prüfung. Bei dem Trigger kann es sich beispielsweise um einen von außen einwirkenden Trigger zu der automatischen Prüfung handeln, wie beispielsweise eine Bewegung der externen Einheit.

Vorzugsweise überprüft die Steuerungsumgebung während dem Betrieb der Haushaltsgerätefunktion und/oder Haushaltsgerätehauptfunktion des Haushaltsgeräts die Anordnung der externen Einheit in dem Bedienungsbereich. Wird die externe Einheit aus dem Bedienungsbereich entfernt, kann die Steuerungsumgebung die Bedienung des Haushaltsgeräts durch die externe Einheit abbrechen und/oder beenden und/oder blockieren. Bei erneuter Anordnung der externen Einheit in dem Bedienungsbereich kann die Steuerungsumgebung die Bedienung des Haushaltsgeräts durch die externe Einheit wieder freigeben.

Denkbar wäre, dass die Kommunikationsschnittstelle die Kommunikation mittels Ultrabreitband zwischen der externen Einheit und dem Haushaltsgerät lediglich zur Lokalisierung und/oder Überprüfung der Anordnung der externen Einheit in dem Bedienungsbereich anwendet. Zur Übertragung zumindest eines Bediensignals von der externen Einheit an das Haushaltsgerät zur Bedienung des Haushaltsgeräts durch die externe Einheit könnte die Kommunikationsschnittstelle eine von einer Ultrabreitband-Kommunikation verschiedene Kommunikationsverbindung verwenden und/oder einsetzen. Ferner wird vorgeschlagen, dass die Kommunikationsschnittstelle zusätzlich zur Kommunikation zumindest mittels Bluetooth vorgesehen ist. Hierdurch kann eine hohe Flexibilität bereitgestellt und ein Komfort weiter gesteigert werden. Zudem können neben einer UWB-Kommunikation weitere Kommunikationsmöglichkeiten zwischen einer externen Einheit und einem Haushaltsgerät bereitgestellt werden. Zur Übertragung zumindest des Bediensignals von der externen Einheit an das Haushaltsgerät zur Bedienung des Haushaltsgeräts durch die externe Einheit könnte die Kommunikation zwischen der externen Einheit und dem Haushaltsgerät mittels Bluetooth erfolgen. Die Kommunikationsschnittstelle könnte zusätzlich zu einer Kommunikation mittels beispielswese einer LAN-, WLAN-, WPAN-, Infrarot-, NFC- und/oder ZigBee-Verbindung vorgesehen sein. Denkbar wäre auch, dass zumindest das Bediensignal von der externen Einheit an das Haushaltsgerät mittels der LAN-, WLAN-, WPAN-, Infrarot-, NFC- und/oder ZigBee-Verbindung übertragbar ist.

Insbesondere ist die externe Einheit als ein elektrisches Gerät ausgebildet. Bei der externen Einheit könnte es sich um ein Endgerät, wie beispielsweise einen Computer, insbesondere einen Desktop-Computer, und/oder einen Laptop und/oder ein Convertible handeln. Um eine Flexibilität sowie einen Komfort weiter zu steigern, wird vorgeschlagen, dass die externe Einheit als ein Mobilgerät ausgebildet ist. Zudem können damit bevorzugt bereits bestehende vorteilhaft mobile externe Einheiten, wie beispielsweise Handys und/oder Tablets, zumindest zur Ermittlung eines Garstatus eines Lebensmittels verwendet werden. Dadurch können wiederum Kosten gesenkt und ein kompaktes und/oder preiswertes Haushaltsgerätesystem bereitgestellt werden.

Insbesondere sind die externe Einheit und das Haushaltsgerät voneinander verschiedene Objekte. Die als Mobilgerät ausgebildete externe Einheit könnte beispielsweise eine Fernbedienung sein. Vorteilhaft ist das Mobilgerät beispielsweise ein Handy und/oder ein Tablet und/oder ein Phablet und/oder ein Personal Digital Assistant (PDA). Bevorzugt handelt es sich bei der externen Einheit um eine Multimedia-Einheit. Insbesondere ist die Multimedia-Einheit eine Einheit, welche dazu vorgesehen ist, Informationen und/oder Inhalte aus digitalen Medien bereitzustellen. Bei den digitalen Medien, insbesondere elektronisch codierten Medien, könnte es sich beispielsweise um zumindest eine Animation und/oder ein Audio und/oder eine Fotografie und/oder eine Grafik und/oder einen Text und/oder ein Video handeln. Besonders bevorzugt ist auf der externen Einheit ein Programm und/oder eine App installiert, mittels welcher das Haushaltsgerät bedienbar ist. Bei dem Programm und/oder der App kann es sich um ein speziell für zumindest die Bedienung des Haushaltsgeräts entworfenes und/oder programmiertes Programm und/oder App handeln, welche insbesondere von dem Bediener auf die externe Einheit installierbar ist. Denkbar wäre auch, dass das Programm und/oder die App bereits auf der externen Einheit, beispielsweise ab Werk, vorinstalliert ist/sind.

Denkbar wäre, dass die Kommunikationsschnittstelle eine getrennt von der externen Einheit und/oder dem Haushaltsgerät ausgebildete Einheit ist. Ferner wird vorgeschlagen, dass die Kommunikationsschnittstelle zumindest teilweise in der externen Einheit integriert ist. Dadurch kann ein komfortables, effizientes und kompaktes Haushaltsgerätesystem bereitgestellt werden. Bevorzugt umfasst die externe Einheit eine Kommunikationseinheit zur Kommunikation mit zumindest dem Haushaltsgerät. Insbesondere ist die Kommunikationseinheit Teil der Kommunikationsschnittstelle. Vorteilhaft ist die Kommunikationseinheit mittels der Steuereinheit der externen Einheit ansteuerbar und/oder regelbar.

Um einen Komfort und eine Effizienz weiter zu steigern, wird vorgeschlagen, dass die Kommunikationsschnittstelle zumindest teilweise in dem Haushaltsgerät integriert ist. Bevorzugt umfasst das Haushaltsgerät eine Haushaltsgerätekommunikationseinheit zur Kommunikation mit zumindest der externen Einheit. Insbesondere ist die Haushaltsgerätekommunikationseinheit Teil der Kommunikationsschnittstelle. Vorteilhaft ist die Haushaltsgerätekommunikationseinheit mittels der Haushaltsgerätesteuereinheit ansteuerbar und/oder regelbar.

Darüber hinaus geht die Erfindung aus von einem Verfahren zum Betrieb eines Haushaltsgerätesystems, insbesondere eines zuvor genannten Haushaltsgerätesystems, bei welchem automatisch geprüft wird, ob eine externe Einheit zu einer Bedienung zumindest eines Haushaltsgeräts in einem Bedienungsbereich angeordnet ist.

Es wird vorgeschlagen, dass eine Kommunikation zwischen dem Haushaltsgerät und der externen Einheit mittels Ultrabreitband-Kommunikation durchgeführt wird. Durch ein derartiges Betriebsverfahren kann ein Komfort, hinsichtlich eines Bedienkomforts, gesteigert sowie eine hohe Sicherheit erreicht werden. Aufgrund einer Kommunikation mittels Ultrabreitband kann eine Entfernungsmessung zwischen einer externen Einheit und einem Haushaltsgerät sowie eine Anwesenheitserkennung der externen Einheit in einem Bedienungsbereich effizienter, und zwar schneller und/oder komfortabler gestaltet werden. Damit kann wiederum eine Kommunikationsverbindung zwischen der externen Einheit und dem Haushaltsgerät erheblich verbessert werden. Außerdem kann eine komfortable und/oder schnelle und/oder unkomplizierte Bedienung des Haushaltsgeräts durch die externe Einheit ermöglicht werden, welche nur unter Erfüllung vordefinierter Vorgaben freigegeben werden kann.

Das Haushaltsgerätesystem und/oder das Haushaltsgerät und/oder das Verfahren soll/sollen hierbei nicht auf die oben beschriebene Anwendung und Ausführungsform beschränkt sein. Insbesondere kann/können das Haushaltsgerätesystem und/oder das Haushaltsgerät und/oder das Verfahren zu einer Erfüllung einer hierin beschriebenen Funktionsweise eine von einer hierin genannten Anzahl von einzelnen Elementen, Bauteilen, Einheiten und Verfahrensschritten abweichende Anzahl aufweisen. Zudem sollen bei den in diesem Dokument angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Haushaltsgerätesystem mit einem Haushaltsgerät, einer Steuerungsumgebung und einer externen Einheit und
- Fig. 2: ein schematisch dargestelltes Verfahren zum Betrieb des Haushaltsgerätesystems gemäß Figur 1.

### Beschreibung des Ausführungsbeispiels

Nachfolgend handelt es sich bei den vorliegenden Figuren um schematische und nicht maßstabsgetreue Darstellungen.

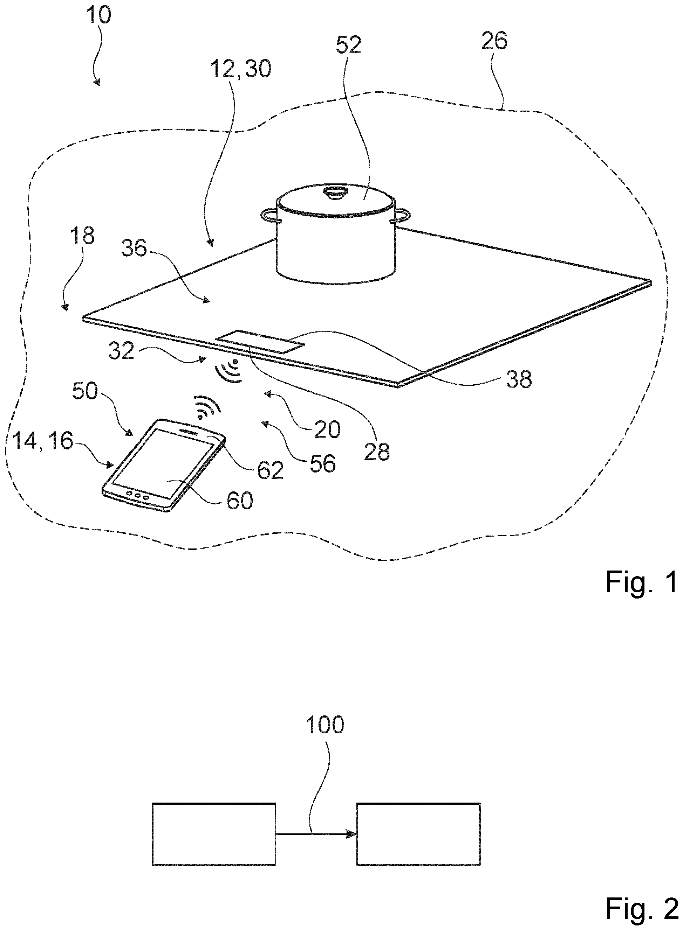

Die Figur 1 zeigt ein Haushaltsgerätesystem 10, welches vorliegend beispielhaft als Garsystem ausgebildet ist. In dieser beispielhaften Ausgestaltung handelt es sich bei dem Garsystem um ein Kochfeldsystem, und zwar ein Induktionskochfeldsystem. Alternativ und/oder zusätzlich könnte das Haushaltsgerätesystem 10 auch als ein Haushaltsreinigungsgerätesystem und/oder als Haushaltskältegerätesystem und/oder das Garsystem auch als ein Backofensystem, Mikrowellensystem, Dampfgerätesystem und/oder Grillgerätesystem ausgebildet sein.

Das Haushaltsgerätesystem 10 weist ein Haushaltsgerät 12 auf. Das Haushaltsgerät 12 ist vorliegend dementsprechend als Kochfeld 30 ausgebildet. Bei dem als Kochfeld 30 ausgebildeten Haushaltsgerät 12 handelt es sich in dieser beispielhaften Ausführung um ein Induktionskochfeld. Alternativ und/oder zusätzlich wäre auch ein klassisches Kochfeld mit einer Widerstandsheizeinheit denkbar. Ferner könnte das Haushaltsgerät 12 auch beispielsweise als ein Ofen und/oder als eine Mikrowelle und/oder als ein Grillgerät und/oder als ein Dampfgargerät ausgebildet sein.

Das Haushaltsgerätesystem 10 weist eine externe Einheit 14 auf. Die externe Einheit 14 und das Haushaltsgerät 12 sind voneinander verschiedene Objekte. Vorliegend ist die externe Einheit 14 als ein Mobilgerät 16 ausgebildet. Die externe Einheit 14 könnte eine Fernbedienung und/oder ein Tablet und/oder ein Laptop sein. In dieser beispielhaften Ausführung ist die externe Einheit 14 als ein Smartphone ausgebildet.

Zur Steuerung und/oder Regelung weist das Haushaltsgerätesystem 10 eine Steuerungsumgebung 18 auf. Das Haushaltsgerät 12 und/oder die externe Einheit 14 kann/können zumindest teilweise die Steuerungsumgebung 18 aufweisen. Vorliegend weist das Haushaltsgerät 12 eine Haushaltsgerätesteuereinheit 32 auf. Die Haushaltsgerätesteuereinheit 30 ist Teil der Steuerungsumgebung 18. Die Haushaltsgerätesteuereinheit 32 ist dazu vorgesehen, das Haushaltsgerät 12, und zwar zumindest eine Haushaltsgerätefunktion und/oder zumindest eine Haushaltsgerätehauptfunktion zu steuern und/oder zu regeln. Das Haushaltsgerät 12 weist eine Heizeinheit 36 zur Beheizung zumindest eines Gargeschirrs 52 auf. Vorliegend ist die Steuerungsumgebung 18, und zwar die Haushaltsgerätesteuereinheit 32 zumindest dazu vorgesehen, zumindest eine Energiezufuhr zu der Heizeinheit 36 zur Beheizung des Gargeschirrs 52 zu steuern und/oder zu regeln.

In zumindest einem Betriebszustand steuert und/oder regelt die Steuerungsumgebung 18 die Bedienung des Haushaltsgeräts 12 durch die externe Einheit 14. Die externe Einheit 14 weist eine Steuereinheit 50 auf. Die Steuereinheit 50 der externen Einheit 14 ist Teil der Steuerungsumgebung 18. Die Steuereinheit 50 ist dazu vorgesehen, die externe Einheit 14 zu steuern und/oder zu regeln. Vorliegend ist die Steuereinheit 50 der externen Einheit 14 zusätzlich dazu vorgesehen, das Haushaltsgerät 12 zumindest teilweise zu steuern und/oder zu regeln. Ferner ist die externe Einheit 14 zu einer Bedienung zumindest des Haushaltsgeräts 12 vorgesehen. Beispielsweise ist die Beheizung zumindest des Gargeschirrs 52 durch die Heizeinheit 36 zumindest teilweise mittels der externen Einheit 14 steuerbar und/oder regelbar.

Das Haushaltsgerätesystem 10 umfasst zumindest eine Bedienerschnittstelle 56. Vorliegend weist die Steuerungsumgebung 18 die Bedienerschnittstelle 56 auf. Die Bedienerschnittstelle 56 ist zu einer Eingabe und/oder Auswahl und/oder einer Ausgabe zumindest eines Werts und/oder Parameters und/oder einer Funktion von und/oder an einen Bediener vorgesehen. Die Bedienerschnittstelle 56 ist zu einer Eingabe und/oder Auswahl und/oder Ausgabe von Betriebsparametern vorgesehen, wie beispielsweise zumindest einer Heizleistung der Heizeinheit 36 und/oder zumindest einer Heizleistungsdichte der Heizeinheit 36 und/oder zumindest einer Heizzone und/oder zumindest einer Temperatur und/oder zumindest einem anderen, einem Fachmann als sinnvoll erscheinenden Betriebsparameter. Mittels der Bedienerschnittstelle 56 ist vorliegend zumindest die Haushaltsgerätefunktion und/oder Haushaltsgerätehauptfunktion auswählbar und/oder startbar und/oder beendbar und/oder einstellbar und/oder veränderbar und/oder bedienbar. In dieser beispielhaften Ausgestaltung ist die Bedienerschnittstelle 56 wenigstens teilweise in der externen Einheit 14 und wenigstens teilweise in dem Haushaltsgerät 12 integriert. Der Bediener kann mittels der externen Einheit 14, welche zumindest teilweise die Bedienerschnittstelle 56 aufweist, das Haushaltsgerät 12 steuern und/oder regeln.

Die externe Einheit 14 weist vorliegend zumindest ein Bedienelement 60 auf. Das Bedienelement 60 ist haptisch und/oder akustisch von dem Bediener bedienbar. In dieser beispielhaften Ausführung umfasst das Bedienelement 60 ein Touch-Display. Das Bedienelement 60 ist zu einer Eingabe und/oder einer Ausgabe zumindest eines Werts und/oder Parameters und/oder einer Funktion von dem und/oder an den Bediener vorgesehen. Vorliegend ist das Bedienelement 60 Teil der Bedienerschnittstelle 56. Das Haushaltgerät 12 ist mittels des Bedienelements 60 steuerbar und/oder regelbar. Ferner interagiert die Steuereinheit 50 der externen Einheit 14 mit dem Bedienelement 60.

Ferner weist das Haushaltsgerät 12 vorliegend eine Haushaltsgerätebedienerschnittstelle 38 auf. Die Haushaltsgerätebedienerschnittstelle 38 ist zu einer Eingabe und/oder einer Ausgabe zumindest eines Werts und/oder Parameters und/oder einer Funktion von dem und/oder an den Bediener vorgesehen. Vorliegend ist die Haushaltsgerätebedienerschnittstelle 38 Teil der Bedienerschnittstelle 56. Die Haushaltsgerätebedienerschnittstelle 38 interagiert mit der Haushaltsgerätesteuereinheit 32.

Die externe Einheit 14 und das Haushaltsgerät 12 sind zu einer drahtlosen Kommunikation miteinander vorgesehen. Denkbar wäre jedoch auch, dass die externe Einheit 14 und das Haushaltsgerät 12 drahtgebunden miteinander kommunizieren. Zur Kommunikation zwischen der externen Einheit 14 und dem Haushaltsgerät 12 weist die Steuerungsumgebung 18 zumindest eine Kommunikationsschnittstelle 20 auf. Die Steuerungsumgebung 18 ist dazu vorgesehen, zumindest die Kommunikation zwischen der externen Einheit 14 und dem Haushaltsgerät 12 mittels der Kommunikationsschnittstelle 20 zu steuern und/oder zu regeln. Die Kommunikationsschnittstelle 20 ist zur Kommunikation mittels Ultrabreitband (UWB) vorgesehen. Vorliegend kommuniziert in zumindest einem Betriebszustand das Haushaltsgerät 12 mit der externen Einheit 14 mittels Ultrabreitband.

Die Kommunikationsschnittstelle 20 ist zumindest teilweise in dem Haushaltsgerät 12 und/oder die externe Einheit 14 integriert. Vorliegend umfasst die externe Einheit 14 eine Kommunikationseinheit 62. Die Kommunikationseinheit 62 ist zur Kommunikation mit zumindest dem Haushaltsgerät 12 vorgesehen. Die Kommunikationseinheit 62 ist Teil der Kommunikationsschnittstelle 20. Das Haushaltsgerät 12 weist eine Haushaltsgerätekommunikationseinheit 28 auf. Die Haushaltsgerätekommunikationseinheit 28 ist zur Kommunikation mit zumindest der externen Einheit 14 vorgesehen. Die Haushaltsgerätekommunikationseinheit 28 ist Teil der Kommunikationsschnittstelle 20.

Die Steuerungsumgebung 18 ist dazu vorgesehen, in zumindest einem Betriebszustand automatisch zu prüfen, ob die externe Einheit 14 zur Bedienung zumindest des Haushaltsgeräts 12 in einem Bedienungsbereich 26 angeordnet ist. Der Bedienungsbereich 26 ist in Figur 1 beispielhaft dargestellt. Das Haushaltsgerät 12 ist innerhalb des Bedienungsbereichs 26 angeordnet. Der Bedienungsbereich 26 erstreckt sich bei einer senkrechten Betrachtung auf eine Haupterstreckungsebene eines Bodens eines Zimmers, in welchem das Haushaltsgerät 12 angeordnet ist, zumindest abschnittsweise und bevorzugt vollständig um das Haushaltsgerät 12 herum. Das Haushaltsgerät 12 ist, und zwar aufgrund gesetzlicher Vorgaben, durch die externe Einheit 14 bedienbar für den Fall, dass die externe Einheit 14 innerhalb des Bedienungsbereichs 26 angeordnet ist. Für den Fall, dass die externe Einheit 14 innerhalb des Bedienungsbereichs 26 angeordnet ist, ist die Steuerungsumgebung 18 dazu vorgesehen, die Bedienung des Haushaltsgeräts 12 durch die externe Einheit 14 freizugeben. Für den Fall, dass die externe Einheit 14 außerhalb des Bedienungsbereichs 26 angeordnet ist, ist die Steuerungsumgebung 18 dazu vorgesehen, die Bedienung des Haushaltsgeräts 12 durch die externe Einheit 14 zu verweigern. Dadurch kann eine hohe Sicherheit für einen Bediener bereitgestellt werden.

Vorliegend ist die Steuerungsumgebung 18 dazu vorgesehen, zeitlich wiederkehrend automatisch eine Verbindung zwischen der externen Einheit 14 und dem Haushaltsgerät 12 zu überprüfen. Im vorliegenden Ausführungsbeispiel prüft die Steuerungsumgebung 18 regelmäßigen zeitlichen Abständen von maximal 300 s, ob die externe Einheit 14 zu der Bedienung des Haushaltsgeräts 12 in dem Bedienungsbereich 26 angeordnet ist. Ferner prüft die Steuerungsumgebung 18 über eine Zeitdauer von mindestens 5 min automatisch, ob die externe Einheit 14 zu der Bedienung des Haushaltsgeräts 12 in dem Bedienungsbereich 26 angeordnet ist.

Denkbar wäre, dass die Kommunikationsschnittstelle 20 die Kommunikation mittels Ultrabreitband zwischen der externen Einheit 14 und dem Haushaltsgerät 12 lediglich zur Lokalisierung- und/oder Überprüfung der Anordnung der externen Einheit 14 in dem Bedienungsbereich 26 anwendet. Zur Übertragung zumindest eines Bediensignals von der externen Einheit 14 an das Haushaltsgerät 12 zur Bedienung des Haushaltsgeräts 12 durch die externe Einheit 14 kann die Kommunikationsschnittstelle 20 eine von einer Ultrabreitband-Kommunikation verschiedene Kommunikationsverbindung verwenden und/oder einsetzen. Vorliegend ist die Kommunikationsschnittstelle 20 zusätzlich zur Kommunikation zumindest mittels Bluetooth vorgesehen. Zusätzlich kann die Kommunikationsschnittstelle 20 auch zu einer Kommunikation mittels beispielsweise einer LAN-, WLAN-, WPAN-, Infrarot-, NFC- und/oder ZigBee-Verbindung vorgesehen sein.

Figur 2 zeigt schematisch ein Verfahrensfließbild zur Darstellung eines Verfahrens zum Betrieb des Haushaltsgerätesystems 10. Das Verfahren kann mehrere Verfahrensschritte umfassen. Vorliegend ist das Verfahren lediglich anhand des Verfahrensschritts 100 beispielhaft beschrieben. In dem Verfahrensschritt 100 wird automatisch geprüft, ob die externe Einheit 14 zur Bedienung zumindest des Haushaltsgeräts 12 in dem Bedienungsbereich 26 angeordnet ist. Ferner wird die Kommunikation zwischen dem Haushaltsgerät 12 und der externen Einheit 14 mittels Ultrabreitband-Kommunikation durchgeführt. Dadurch kann eine Sicherheit erhöht und eine Kommunikation zwischen der externen Einheit 14 und dem Haushaltsgerät 12 erheblich verbessert werden.

### Bezugszeichen

- 10: Haushaltsgerätesystem
- 12: Haushaltsgerät
- 14: Externe Einheit
- 16: Mobilgerät
- 18: Steuerungsumgebung
- 20: Kommunikationsschnittstelle
- 26: Bedienungsbereich
- 28: Haushaltsgerätekommunikationseinheit
- 30: Kochfeld
- 32: Haushaltsgerätesteuereinheit
- 36: Heizeinheit
- 38: Haushaltsgerätebedienerschnittstelle
- 50: Steuereinheit
- 52: Gargeschirr
- 56: Bedienerschnittstelle
- 60: Bedienelement
- 62: Kommunikationseinheit
- 100: Verfahrensschritt

## Patentansprüche

1. Haushaltsgerätesystem (10) mit einer zumindest eine Kommunikationsschnittstelle (20) aufweisenden Steuerungsumgebung (18), welche dazu vorgesehen ist, in zumindest einem Betriebszustand automatisch zu prüfen, ob eine externe Einheit (14) zu einer Bedienung zumindest eines Haushaltsgeräts (12) in einem Bedienungsbereich (26) angeordnet ist, **dadurch gekennzeichnet, dass** die Kommunikationsschnittstelle (20) zur Kommunikation mittels Ultrabreitband vorgesehen ist.

2. Haushaltsgerätesystem (10) nach Anspruch 1, **dadurch gekennzeichnet, dass** für den Fall, dass die externe Einheit (14) innerhalb des Bedienungsbereichs (26) angeordnet ist, die Steuerungsumgebung (18) dazu vorgesehen ist, die Bedienung des Haushaltsgeräts (12) durch die externe Einheit (14) freizugeben.

3. Haushaltsgerätesystem (10) nach Anspruch 1 oder 2, **dadurch gekennzeichnet, dass** für den Fall, dass die externe Einheit (14) außerhalb des Bedienungsbereichs (26) angeordnet ist, die Steuerungsumgebung (18) dazu vorgesehen ist, die Bedienung des Haushaltsgeräts (12) durch die externe Einheit (14) zu verweigern.

4. Haushaltsgerätesystem (10) nach einem der vorhergehenden Ansprüche, **dadurch gekennzeichnet, dass** die Steuerungsumgebung (18) dazu vorgesehen ist, zeitlich wiederkehrend automatisch eine Verbindung zwischen der externen Einheit (14) und dem Haushaltsgerät (12) zu überprüfen.

5. Haushaltsgerätesystem (10) nach einem der vorhergehenden Ansprüche, **dadurch gekennzeichnet, dass** die Kommunikationsschnittstelle (20) zusätzlich zur Kommunikation zumindest mittels Bluetooth vorgesehen ist.

6. Haushaltsgerätesystem (10) nach einem der vorhergehenden Ansprüche, **gekennzeichnet durch** die externe Einheit (14), welche als ein Mobilgerät (16) ausgebildet ist.

7. Haushaltsgerätesystem (10) nach Anspruch 5, **dadurch gekennzeichnet, dass** die Kommunikationsschnittstelle (20) zumindest teilweise in der externen Einheit (14) integriert ist.

8. Haushaltsgerätesystem (10) nach einem der vorhergehenden Ansprüche, **gekennzeichnet durch** das Haushaltsgerät (12), in welchem die Kommunikationsschnittstelle (20) zumindest teilweise integriert ist.

9. Haushaltsgerätesystem (10) nach Anspruch 7, **dadurch gekennzeichnet, dass** das Haushaltsgerät (12) als ein Kochfeld (30) ausgebildet ist.

10. Haushaltsgerät (12), insbesondere Kochfeld (30), eines Haushaltsgerätesystems (10) zumindest nach Anspruch 8 oder 9.

11. Verfahren zum Betrieb eines Haushaltsgerätesystems (10), insbesondere nach einem der Ansprüche 1 bis 9, bei welchem automatisch geprüft wird, ob eine externe Einheit (14) zu einer Bedienung zumindest eines Haushaltsgeräts (12) in einem Bedienungsbereich (26) angeordnet ist, **dadurch gekennzeichnet, dass** eine Kommunikation zwischen dem Haushaltsgerät (12) und der externen Einheit (14) mittels Ultrabreitband-Kommunikation durchgeführt wird.
